# FASCICULE DE BREVET EUROPEEN

(11) **EP 0 319 355 B1**
(45) Date de publication et mention de la délivrance du brevet: **28.04.1993**
(21) Numéro de dépôt: 88402778.0
(22) Date de dépôt: 04.11.1988
(51) Int. Cl.: G01P 3/487, G01P 3/488

(54) **Roulement à détecteur de champ magnétique**
Lager mit Magnetfelddetektor
Bearing with a magnetic field detector

(30) Priorité: 13.11.1987 US 120406
(43) Date de publication de la demande: 07.06.1989
(73) Titulaire: S.N.R. ROULEMENTS, 74010 Annecy Cédex (FR)
(72) Inventeur: Santos, Alfred John, Canton, CT 06020 (US); Cook, Frédérick Albert, Jr., West Hartford, CT 06107 (US); Duncan, Scott Morgan, Avon, CT 06001 (US); Moseley, John, Norfolk, CT 06058 (US)
(74) Mandataire: Ernst-Schonberg, Michel

(56) Documents cités:
- EP-A- 0 213 732
- US-A- 3 508 241
- US-A- 3 793 545
- US-A- 4 225 200

## Description

L'invention concerne un roulement à détecteur de champ magnétique conforme au préambule de la revendication qui fournit l'indication de la rotation angulaire d'un élément rotatif par rapport à une bague annulaire coaxiale.

La publication EP-A-0213732 décrit un anneau magnétique de détection de la rotation d'un organe pour être monté sur ledit organe et produire un signal magnétique en coopération avec un détecteur. L'anneau magnétique possède une aimantation formée par une pluralité de pôles magnétiques de signes opposés.

Le brevet US-3716788 décrit un détecteur à réluctance variable ajouté à un ensemble de roulement de roue pour mesurer la vitesse de l'essieu. Un rotor denté est formé sur une bague de roulement intérieure rotative à l'opposé d'un stator denté fixé à la bague de roulement extérieure fixe. La bague extérieure maintient également le capteur magnétique qui génère une tension en fonction des changements de flux magnétique induit par l'alignement des dents du stator et du rotor au cours de la rotation. La fréquence du courant alternatif produit est proportionnelle à la vitesse de rotation de l'essieu. Un type de détecteur de vitesse comparable est décrit dans le brevet US-3826933. Le détecteur de vitesse possède une bobine magnétique d'acquisition fixée à la bague fixe d'un roulement tandis qu'une roue à dents ferromagnétiques est fixée à la bague rotative du roulement à rouleaux.

Le brevet U.S. 4 069 435 décrit un dispositif de détection du mouvement relatif dans un roulement. Ce dispositif est constitué par une bobine magnétique d'acquisition montée sur le joint de la bague extérieure fixe d'un roulement. Une roue dentée est montée sur la bague rotative du roulement. Lors de la rotation des dents, les variations du champ magnétique sont détectées par le capteur magnétique. La fréquence des variations détectées peut être utilisée pour le calcul de la vitesse et de l'accélération.

Selon le brevet U.S. 4 688 951, un circuit électrique est fixé à l'une des deux bagues de roulement pour créer le champ magnétique.

Les dispositifs de détection connus, décrits ci-dessus, présentent de nombreux inconvénients. Les détecteurs à réluctance variable génèrent un signal de tension de sortie dont la fréquence et l'amplitude sont proportionnelles à la vitesse.

Aux faibles vitesses, le signal de sortie est faible et peut être imprécis. Par ailleurs, lorsque les détecteurs précités sont ajoutés aux roulements, l'encombrement du roulement est plus grand en raison des composants de détection ajoutés. La précision mécanique et l'exactitude du signal diminuent en raison de l'accumulation de tolérances, et la construction de son ensemble devient plus complexe. En outre, les roulements sont difficiles à installer et exigent parfois un processus d'installation distinct du détecteur.

L'invention a pour objet un roulement équipé de moyens de détection de champ magnétique qui peuvent consister en un ou plusieurs détecteurs. Le roulement est pourvu de façon permanente d'un champ magnétique quelle que soit la vitesse relative d'un élément par rapport à un autre et, notamment, si cette vitesse est nulle, ce qui en fait un roulement plus simple et d'un coût plus faible que les autres roulements qui incluent des détecteurs de champ magnétique mais exigent un circuit électrique pour générer le champ magnétique.

Selon l'invention, le roulement,composé notamment par un premier élément et un second élément relativement rotatif par rapport au premier élément,possède des moyens qui fournissent un champ magnétique permanent et des moyens de détection du champ magnétique.

D'autres caractéristiques et avantages seront mieux compris en se référant à la description détaillée et aux dessins suivants dans lesquels :
- la figure 1 est une coupe axiale partielle de l'une des réalisations de l'invention,
- la figure 2 est une vue de face de l'élément annulaire perméable de la figure 1,
- la figure 3 est une coupe axiale partielle d'une deuxième variante de réalisation de l'invention,
- la figure 4 est une vue en perspective de la bague ajustée avec serrage de la figure 3,
- la figure 5 est une coupe axiale partielle d'une troisième variante de réalisation de l'invention,
- la figure 6 est une vue en perspective de la bague magnétisée de la réalisation de la figure 5,
- la figure 7 est une vue en perspective de la bague extérieure de la réalisation de la figure 5,
- la figure 8 est une coupe axiale partielle d'une quatrième variante de réalisation de l'invention,
- la figure 9 est une coupe axiale d'une cinquième variante de réalisation de l'invention,
- la figure 10 est une vue de face de la plaque de butée magnétisée en référence de la figure 9,
- la figure 11 est une vue de face de la plaque de butée de la figure 9 sur laquelle est monté le détecteur de champ magnétique.

Dans les diverses figures, les pièces semblables sont désignées par les même références.

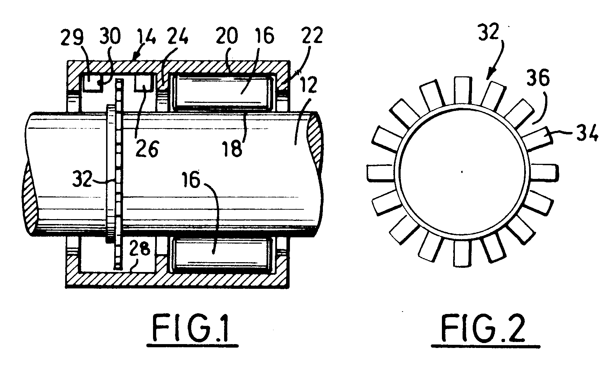

Concernant les dessins et, plus particulièrement la figure 1, un arbre rotatif 12 traverse une bague annulaire coaxiale 14 espacée radialement par rapport à l'arbre rotatif 12. Une pluralité de rouleaux 16 sont positionnés dans l'espace annulaire entre l'arbre rotatif et la bague annulaire coaxiale 14. Les rouleaux tournent autour de l'arbre rotatif sur une partie axiale 18 de la surface circulaire de l'arbre rotatif. La partie axiale 18 sert ainsi de chemin de roulement. La surface intérieure 20 de la bague annulaire coaxiale sert également de chemin de roulement aux rouleaux 16.

On désignera dans ce qui suit par l'expression "chemin de roulement" toute surface le long de laquelle roule un élément roulant tel que les rouleaux 16.

Le chemin de roulement 20 de la bague annulaire 14 est aligné et espacé radialement par rapport au chemin de roulement 18 de l'arbre 12. Les rouleaux 16 sont maintenus dans leur position axiale appropriée sur les chemins de roulement par les épaulements circulaires 22 et 24 de la bague 14.

Un aimant 26 est monté sur la surface intérieure 28 de la bague annulaire 14. L'aimant est séparé axialement des rouleaux par l'épaulement circulaire 24.

Une détecteur de champ magnétique 30, tel qu'un détecteur magnétorésistif, à effet de Hall ou à effet de Wiegand, est monté sur un support 29 qui est réuni à la surface intérieure de la bague annulaire 14. Le détecteur de champ magnétique est aligné axialement et espacé axialement par rapport à l'aimant 26.

Un élément annulaire perméable 32 au flux magnétique est rigidement lié à la périphérie de l'arbre rotatif 12. L'élément annulaire perméable 32 s'étend radialement entre l'aimant permanent 26 et le détecteur 30. L'élément annulaire perméable peut, par exemple, être un rupteur à ailettes (figure 2) qui est fixé à l'arbre rotatif et qui tourne avec l'arbre.

Concernant la figure 2, le rupteur à ailettes 32 possède une pluralité de dents 34 espacées uniformément sur la circonférence, formant ainsi des ouvertures ou des gorges 36 espacées uniformément sur la circonférence. Les gorges sont positionnées radialement pour permettre au flux magnétique de passer de l'aimant 26 au détecteur 30 par une gorge 36 et le long de la bague annulaire 14 puis de retourner à l'aimant lorsqu'une gorge est alignée axialement avec l'aimant et le détecteur.

En fonctionnement, l'aimant 26 fournit un champ magnétique permanent. Le flux magnétique suit normalement un trajet complet par le détecteur 30 et la bague annulaire 14 sur la voie de retour vers l'aimant. Cependant, comme le rupteur à ailettes 32 tourne, les dents 34 shuntent le flux magnétique vers la bague annulaire 14 qui retourne à l'aimant sans passer par le détecteur. Le détecteur produit ainsi un signal interrompu représentant des unités incrémentales de déplacement angulaire de l'axe 12 par rapport à la bague annulaire fixe 14.

En fonction du circuit électronique traitant le signal du détecteur, le signal de sortie peut être analogique ou numérique. Des modifications de l'amplitude absolue du signal de sortie indiquent des unités incrémentales de déplacement angulaire.

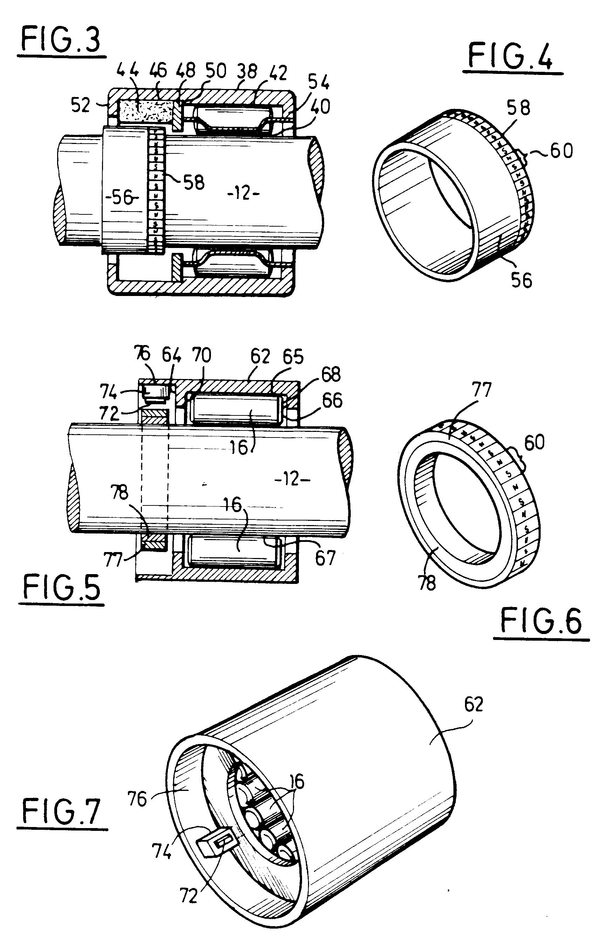

Selon la figure 3, l'arbre rotatif 12 est monté dans une bague annulaire coaxiale 38 avec les rouleaux 16 adaptés pour rouler dans l'espace annulaire séparant le chemin de roulement 40 sur l'arbre rotatif 12 du chemin de roulement 42 sur la surface intérieure de la bague 38.

Un détecteur 44 est monté sur la surface intérieure 46 de la bague 38. Le détecteur est maintenu en position axiale par une rondelle 48, montée contre l'épaulement annulaire 50, et par un épaulement circulaire 52 à une extrémité de la bague 38. Les rouleaux 16 sont maintenus sur les chemins de roulement 40 et 42 de l'arbre rotatif 12 et de la bague 38, respectivement par la rondelle 48 et l'épaulement circulaire 54 à l'autre extrémité de la bague 38.

Les moyens qui produisent un champ magnétique permanent sont constitués par une bague ferromagnétique 56 magnétisée en permanence qui est ajustée par serrage sur l'arbre rotatif 12. Tel qu'il est utilisé par les présentes et dans les revendications annexées, on entend par matériau "ferromagnétique" une substance qui, une fois magnétisée, le reste de façon permanente en l'absence de champ magnétique extérieur. Une portion axiale 58 de la bague ferromagnétique 56 est munie circonférentiellement d'une pluralité de segments de pôles magnétiques 60. Chaque segment 60 possède un pôle nord et un pôle sud. Ces segments sont agencés pour que chaque pôle nord soit situé entre deux pôles sud et que chaque pôle sud soit situé entre deux pôles nord.

Dans la réalisation de la figure 5, l'arbre rotatif est monté dans une bague annulaire 62 possédant un lamage 64. Les rouleaux 16 sont maintenus axialement sur les chemins de roulement 65 et 67 de la bague annulaire 62 et de l'arbre rotatif 12, respectivement par l'épaulement annulaire 66 formé par le flasque circulaire 68 adjacent à une extrémité axiale des rouleaux et par l'épaulement annulaire 70 adjacent à l'autre extrémité axiale des rouleaux.

Un détecteur 72 est monté sur un support 74 qui fait saillie radialement vers l'intérieur sur la surface annulaire intérieure 76 du lamage 64 à laquelle il est fixé.

Les moyens de production du champ magnétique permanent sont formés par une bague annulaire ferromagnétique 77 montée sur l'arbre rotatif 12 par l'intermédiaire d'une bague 78. La bague ferromagnétique 77 est magnétisée en permanence afin de réaliser une pluralité de segments 60 de pôles magnétiques sur toute sa circonférence. Chaque segment possède un pôle nord et un pôle sud.

Ces segments sont agencés de sorte que chaque pôle nord soit situé entre deux pôles sud et que chaque pôle sud soit situé entre deux pôles nord.

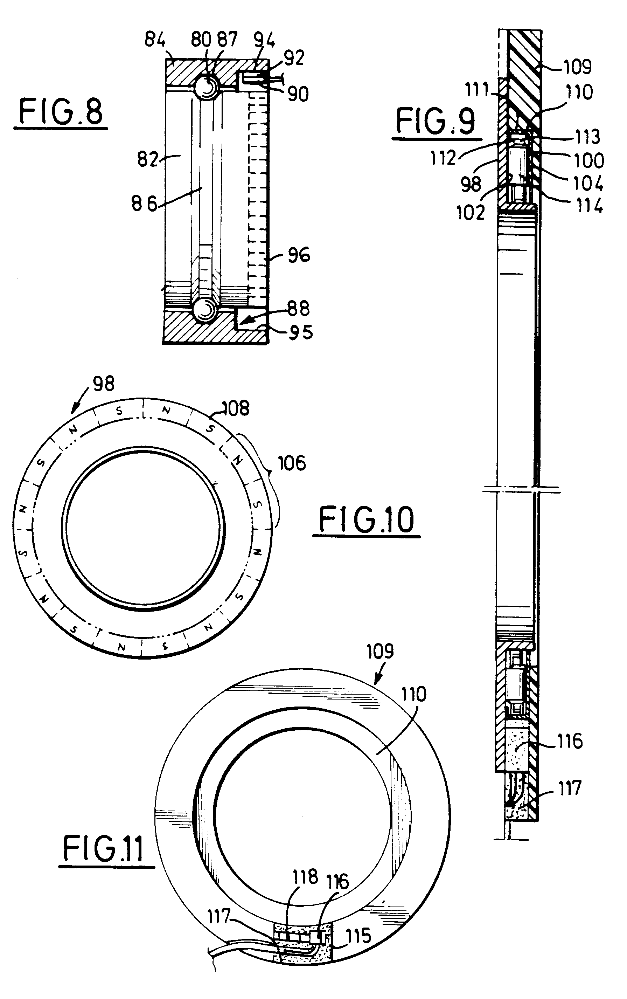

Selon la figure 8, les organes de roulement sont des billes 80 et l'un des chemins de roulement des billes 80 est constitué par une bague annulaire intérieure82. Une bague annulaire extérieure coaxiale 84 est espacée radialement par rapport à la bague annulaire intérieure 82. Les chemins de roulement des billes 80 sont formés par une gorge annulaire extérieure 86 sur la bague intérieure 82 et par une gorge annulaire 87 sur la surface intérieure de la bague extérieure coaxiale 84.

Un lamage 88 s'étend à partir d'une extrémité axiale de la bague annulaire extérieure 84. Un détecteur 90 est monté sur un support 92 qui se prolonge radialement vers l'intérieur à partir de la surface intérieure 95 du lamage 88 sur laquelle le support 92 est fixé.

Un prolongement 96 axial de la bague annulaire intérieure 82 est magnétisé en permanence sur toute sa circonférence selon une structure magnétique.

Cette structure correspond à celle du champ magnétique des exemples de réalisations décrits précédemment.

Les figures 9, 10 et 11 montrent un palier de butée avec une première plaque de butée annulaire 98 et une seconde plaque de butée annulaire 100 espacée axialement de la première. Le chemin annulaire de roulement 102, à prolongement radial, de la plaque de butée annulaire 98 et le chemin de roulement 104, à prolongement radial de la plaque de butée annulaire 100, se font face. Les moyens qui assurent un champ magnétique permanent sont une pluralité de segments 106 magnétisés en permanence (figure 10). Les segments à pôles magnétiques sont disposés dans une structure sur toute la circonférence d'une partie radiale 108 de la plaque de butée 98. Comme le montre la figure 10, chaque segment 106 possède un pôle nord et un pôle sud, les segments étant disposés de sorte que chaque pôle nord soit entre deux pôles sud et que chaque pôle sud soit entre deux pôles nord.

Un support plastique annulaire 109 de détecteur possède un logement ou lamage 110 dans lequel est placée la plaque de butée 100. Le bord de la paroi périphérique extérieure 111 du logement assure la fonction de maintien 112 et s'étend vers l'intérieur au-delà du bord périphérique extérieur d'une cage de retenue 113 des rouleaux 114 disposés de la sorte dans le lamage 110.

Une rainure 115 débouche à partir de la périphérie extérieure du support 109 de détecteur dans le lamage 110 (voir figure 11). Les moyens de détection du champ magnétique sont constitués par un détecteur 116 fixé par une résine 117 dans la rainure 115 à proximité de la structure à pôles magnétiques de la plaque de butée 98. Optionnellement un concentrateur de flux magnétique 118 (figure 11) peut être positionné circonférentiellement, adjacent au détecteur 116. Le concentrateur de flux magnétique facilite la réalisation du circuit magnétique d'une paire de pôles alternés de la bague rotative jusqu'au détecteur de la bague fixe. Ainsi, lorsque le détecteur 116 est centré au niveau d'un segment magnétique, le concentrateur de flux magnétique 118 est centré au niveau d'un segment de pôle magnétique adjacent, de polarité inverse, pour assurer un passage de flux magnétique complet.

Lors du fonctionnement de tous les exemples de réalisation, au passage de chaque segment de polarité alternée devant le détecteur, la polarité et l'intensité du champ magnétique génèrent des signaux électriques délivrés par le détecteur.

Ce signal de tension peut être ensuite traité par des circuits pour produire un signal de sortie indiquant une unité incrémentale de déplacement angulaire. Cette unité est égale au nombre de degrés d'arc de chaque segment polaire. L'utilisation de détecteurs d'intensité de champ magnétique dans la présente invention permet la production d'un signal à toutes les vitesses, même à vitesse zéro.

En fonction du circuit électronique de traitement du signal, délivré par le détecteur, le signal de sortie peut être analogique ou numérique. Des modifications de l'amplitude du signal de sortie indiquent un déplacement angulaire incrémental. Le signal correspondant au déplacement angulaire peut être ensuite traité par un circuit intégré dans le détecteur pour générer un signal de position, de vitesse ou d'accélération.

Le fait d'intégrer une structure magnétique dans un élément tournant pour indiquer le mouvement angulaire incrémental élimine le besoin d'ajouter au roulement un instrument indicateur séparé.

L'aimantation de l'élément rotatif dans un grand nombre de segments permet en outre d'avoir une très haute résolution.

Bien que les variantes de réalisation décrites ci-dessus relèvent de la technologie des roulements, l'invention peut également être utilisée dans des roulements ne contenant pas d'or ganes roulants et s'applique notamment aux paliers ayant un élément tournant par rapport à l'autre élément. Par ailleurs, des moyens doivent être prévus pour assurer un champ magnétique permanent et au moins un détecteur pour la détection du flux magnétique. Ainsi des paliers de tourillon sans éléments de roulement pourraient être inclus dans le champ d'application de cette invention.

L'exemple de la figure 8 possède une bague intérieure rotative et une bague extérieure fixe. Toutefois, si cela est souhaité, il serait possible de placer le détecteur sur une bague intérieure fixe et d'intégrer la structure magnétisée sur une bague extérieure rotative. Par ailleurs, bien que toutes les réalisations soient décrites avec un élément fixe et un élément tournant, les deux éléments pourraient être tournants avec indication de la rotation d'un élément par rapport à l'autre.

Dans tous les exemples décrits, la structure magnétique est sur un élément tournant et le détecteur sur un élément fixe. L'avantage de cette disposition est qu'il n'existe aucun fil ou circuit électronique sur l'élément tournant. Toutefois, lorsque le présence de fil ou d'un circuit électronique sur l'élément tournant s'avère possible, il sera possible d'intégrer la structure magnétique sur l'élément fixe et de monter le détecteur sur l'élément rotatif.

## Revendications

1. Roulement à détecteur de champ magnétique du type comportant un premier élément (98), un deuxième élément (100), un moyen de production d'un champ magnétique permanent, un moyen de détection dudit champ magnétique et dans lequel le moyen de production du champ magnétique est constitué par un élément ferromagnétique qui possède au moins une paire de pôles de signes opposés montés sur un premier élément (98) et dans lequel le moyen de détection du champ est constitué par un détecteur (116), caractérisé par le fait que :
- le premier et le second élément sont constitués par des plaques (98, 100) de butées annulaires espacées axialement qui portent des chemins de roulement (102, 104) de corps roulants (114) disposés entre lesdits chemins de roulement,
- une pluralité de segments (106) à aimantation permanente sont répartis circonférentiellement sur une partie radiale (108) de l'une des plaques (98) de butée, dont chaque segment (106) possède un pôle nord et un pôle sud respectivement disposés entre deux pôles de polarités opposées,
- l'autre plaque de butée (100) est supportée dans un lamage (110) d'un élément annulaire (109) qui possède une rainure radiale (115) de logement du détecteur (116) faisant face aux segments (106) aimantés.

2. Roulement selon la revendication 1, caractérisé par le fait que le chemin de roulement (102) à prolongement radial de la première plaque de butée annulaire (98) et le chemin de roulement (104) à prolongement radial de la deuxième plaque de butée annulaire (100) délimitent axialement le logement (110) des organes roulants (114).

3. Roulement selon l'ensemble des revendications 1 et 2, caractérisé par le fait que la rainure radiale (115) débouche à partir de la périphérie extérieure du support (109) dans le lamage (110).

4. Roulement selon l'une quelconque des revendications 1 à 3, caractérisé par le fait qu'un moyen concentrateur (118) de flux magnétique est adjacent au détecteur (116).

## Claims

1. A magnetic field detector roller bearing comprising a first member (98), a second member (100), a means for generating a permanent magnetic field, a means for detecting this magnetic field and in which the magnetic field generation means is formed by a ferromagnetic member which comprises at least one pair of poles of opposite sign mounted on a first member (98) and in which the field detection means is formed by a detector (116), characterized in that:
- the first and the second member are formed by axially spaced annular thrust plates (98, 100) bearing raceways (102, 104) for rolling bodies (114) disposed between these raceways,
- a plurality of permanently magnetized segments (106) are distributed peripherally over a radial portion (108) of one of the thrust plates (98), each segment (106) of which comprises a north pole and a south pole disposed respectively between two poles of opposite polarity,
- the other thrust plate (100) is supported in a countersink (110) of an annular member (109) which comprises a radial groove (115) for housing the detector (116) facing the magnetized segments (106).

2. A roller bearing as claimed in claim 1, characterized in that the radially prolonged raceway (102) of the first annular thrust plate (98) and the radially prolonged raceway (104) of the second annular thrust plate (100) axially bound the housing (110) of the rolling members (114).

3. A roller bearing as claimed in claims 1 and 2, characterized in that the radial groove (115) communicates from the outer periphery of the support (109) with the countersink (110).

4. A roller bearing as claimed in any one of claims 1 to 3, characterized in that a magnetic flux concentrator means (118) is adjacent to the detector (116).

## Patentansprüche

1. Lager mit Magnetfelddetektor mit einem ersten Teil (98), einem zweiten Teil (100), einer Anordnung zur Erzeugung eines permanenten Magnetfeldes, einer Detektoranordnung für dieses Magnetfeld, wobei die Anordnung zur Erzeugung des Magnetfeldes aus einem ferromagnetischen Teil besteht, das wenigstens ein Paar Pole entgegengesetzter Vorzeichen aufweist, die auf dem ersten Teil (98) angeordnet sind und wobei die Detektoranordnung für das Magnetfeld aus einem Detektor (116) besteht, **dadurch gekennzeichnet**, daß
- das erste und das zweite Teil aus ringförmigen Anschlagplatten (98, 100) bestehen, die in axialem Abstand zueinander angeordnet sind und die Rollwege (102, 104) für die Rollkörper (114) aufweisen, die zwischen den Rollwegen angeordnet sind,
- eine Vielzahl von permanent-magnetischen Segmenten (106) entlang des Umfangs über einen radialen Abschnitt (108) einer der Anschlagplatten (98) verteilt sind, wobei jedes Segment (106) einen Nordpol und einen Südpol aufweist, die jeweils zwischen zwei Polen entgegengesetzter Polarität angeordnet sind, und
- die andere Anschlagplatte (100) in einer Senkung (110) eines ringförmigen Teils (109) gehalten ist, das eine Radialnut (115) zur Aufnahme des Detektors (116) aufweist, der den magnetischen Segmenten (106) gegenüberliegt.

2. Lager nach Anspruch 1, **dadurch gekennzeichnet**, daß der Rollweg (102) in der radialen Verlängerung der ersten ringförmigen Anschlagplatte (98) und der Rollweg (104) in der radialen Verlängerung der zweiten ringförmigen Anschlagplatte (100) axial die Aufnahme (110) der Rollkörper (114) begrenzen.

3. Lager nach Ansprüchen 2 und 3, dadurch gekennzeichnet, daß die ringförmige Nut (115) ausgehend vom äußeren Umfang der Halterung (109) in der Senkung (110) mündet.

4. Lager nach einem der Ansprüche 1 bis 3, dadurch gekennzeichnet, daß eine Konzentratoranordnung (118) für den magnetischen Fluß dem Detektor (116) benachbart ist.
